# EUROPEAN PATENT APPLICATION

(11) **EP 4 741 214 A1**
(43) Date of publication of application: **13.05.2026**
(21) Application number: 25213987.8
(22) Date of filing: 06.11.2025
(51) Int. Cl.: B60L 53/16, B60L 53/18, B60R 16/02, H01R 13/58, H01R 13/62, H01R 31/06

(54) **A CONNECTOR ARRANGEMENT, A CABLE COILING DEVICE AND A CHARGING CABLE ASSEMBLY**

(30) Priority: 08.11.2024 SE 2451128
(71) Applicant: CTEK Sweden AB, 791 42 Falun (SE)
(72) Inventor: Hjort, Mathias, 776 36 Hedemora (SE); Fält, Tommy, 776 70 Vikmanshyttan (SE)
(74) Representative: Brann AB

(57) **Abstract**

The disclosure relates to a connector arrangement (1) for a charging cable (28) for an electric vehicle. The connector arrangement (1) comprises a first connector interface (10) configured to be fixed to a first connector (34) of a vehicle charging cable (28), and a second connector interface (12) configured to releasably accommodate a second connector (36) of the vehicle charging cable (28). The connector arrangement (1) further comprises a socket interaction device (14) configured to engage a socket lid (38) of a vehicle charging station (40), to open the socket lid (38) and to keep the socket lid (38) open, upon a manual operation of the connector arrangement (1).

## Description

### TECHNICAL FIELD

The present disclosure relates generally to charging cables for electric vehicles. More specifically, the disclosure relates to a connector arrangement, a cable coiling device and a charging cable assembly. The disclosure can be applied to charging cables for electric vehicles, which charging cables comprise connectors. However, the disclosure is not restricted to any particular vehicle or charging cable.

### BACKGROUND

Users of electrically driven vehicles need to carry cables having connectors at the ends for connecting between a charging station and the vehicle to charge the vehicle's batteries. The cables usually measure a couple of meters in length to be able to connect the vehicle with the charging station, which may be positioned at varying distances from a charging interface of the parked vehicle.

When a user parks the vehicle at a charging station to commence charging, he/she must collect the cable from a storage compartment, such as the trunk, of the vehicle and connect one connector to a socket of the charging station and the other connector to the charging interface of the vehicle.

The cable may be in disarray from the latest use of the cable, forcing the user to untangle the cable before connecting the connectors. Due to the length of the cable, it is difficult for a use who handles the two connectors to avoid dropping an intermediate section of the cable on the ground between the vehicle and the charging station. The ground may be wet and dirty, which will soil the cable such that the water and dirt will later end up in the trunk of the vehicle when the cable is stowed after use. In addition, it may be hard to connect a connector of the cable to a socket of the charging station when carrying two connectors in the hands, and especially when the socket is closed by a socket lid.

### SUMMARY

Therefore, an object of the disclosure is to provide an improved charging cable arrangement which rectifies the issues outlined above. In particular aspects, objects of the invention are to provide a charging cable arrangement which may be operated using only one hand, which keeps the cable in order, and which reduces the risk of soiling the cable by contact with the ground.

According to a first aspect of the present disclosure, the object is at least partly achieved by a connector arrangement according to claim 1.

Hence, there is provided a connector arrangement for a charging cable for an electric vehicle, the connector arrangement comprises a first connector interface configured to be fixed to a first connector of a vehicle charging cable, and a second connector interface configured to releasably accommodate a second connector of the vehicle charging cable. The connector arrangement further comprises a socket interaction device configured to engage a socket lid of a vehicle charging station, to open the socket lid and to keep the socket lid open, upon a manual operation of the connector arrangement.

The connector arrangement is thus a device which is configured to hold the first and second connectors of a vehicle charging cable. The first and second connectors are preferably kept adjacent to each other.

The configuration of the connector arrangement results in a device which may fix the first and the second connector in relation to each other. **It** is thereby possible to use one hand to hold the two connectors. A user may for instance hold one of the connectors in one hand and the other connector will be carried along because it is secured to the connector arrangement. The user may alternatively hold a part of the connector arrangement in one hand and the first and second connectors will be carried along due to their mechanical connection to the connector arrangement.

The first connector interface may be fixation device configured to be fixedly attached to the first connector. The first connector interface may alternatively be integrated with the first connector as a structural part of the first connector.

The second connector interface may be a holder configured to releasably hold the second connector such that the second connector may be removed from the connector arrangement.

The socket interaction device is a structural element of the connector arrangement, which structural element is dimensioned such that a user may put it in physical contact with the socket lid by moving the connector arrangement. Further movement of the connector arrangement may open the lid using the socket interaction device and the first connector may subsequently be inserted in the socket while the socket lid is kept open by the socket interaction device. The socket interaction device is configured to enable a user to hold the connector arrangement, to open the socket lid and to insert the first connector in the socket using only one hand.

When the first connector has been inserted in the socket, the second connector may be removed from the second connector interface of the connector arrangement such that the second connector may be connected to a charging interface of the vehicle.

Optionally, the connector arrangement comprises a unitary body comprising the first and second connector interfaces. The connector arrangement may thus be a single-component structure, which may be fixedly attached to, or integrated with, the first connector of a vehicle charging cable.

Optionally, the socket interaction device comprises a structure protruding from the connector arrangement. The structure may be rigid. The structure may alternatively comprise a flexible part which enables a greater flexibility regarding dimensioning of the socket interaction device since the structure may flex when it keeps the socket lid open during insertion of the first connector in the socket.

Optionally, the rigid structure comprises an engagement member, configured to engage a socket lid of a vehicle charging station. The engagement member may for instance comprise a depression or a hook-shaped structure, which may engage an edge of the socket lid.

Optionally, the manual operation of the connector arrangement comprises a manually controlled movement of the connector arrangement in relation to a connector socket of a vehicle charging station. The manually controlled movement may comprise sequential part-movements for engaging the lid with the socket interaction device, opening the socket lid with the socket interaction device and inserting the first connector in the socket while the socket interaction device keeps the socket lid open.

Optionally, the second connector interface comprises a locking mechanism configured to releasably lock a second connector of a vehicle charging cable in accommodation with the second connector interface. The locking mechanism may lock the second connector in accommodation with the second connector interface upon insertion of the second connector in the second connector interface. The locking mechanism may be manually operable, by a user, to release the second connector.

Optionally, the locking mechanism comprises a mechanically biased locking member configured to engage a structure of the second connector of the vehicle charging cable. The locking member may be mechanically biased such as by pre-tensioning of the locking member or by a spring. As such, the locking member may automatically move into a locking position with the structure of the second connector when it is inserted in the second connector interface.

Optionally, the mechanically biased locking member is manually operable to release the second connector of the vehicle charging cable from engagement with the locking member. By manually overcoming the mechanical bias, used may unlock and release the engagement with the second connector.

Optionally, the second connector interface comprises a sleeve configured to accommodate the second connector of the vehicle charging cable and wherein the mechanically biased locking member is arranged on the sleeve and comprises a protrusion configured to protrude through the sleeve to engage the structure of the second connector of the vehicle charging cable accommodated in the sleeve.

According to a second aspect of the present disclosure, the object is at least partly achieved by a cable coiling device according to claim 10.

Hence, there is provided a cable coiling device for a vehicle charging cable, the cable coiling device comprising an elongated flexible pre-shaped member configured to be fixed to a vehicle charging cable and to extend along at least a part of a length of the vehicle charging cable. The pre-shaped member may be configured to either be fixed alongside the charging cable or to be integrated in the charging cable. The pre-shaped member is configured to be coil-shaped to keep the charging cable in order, i.e. in a coil. Thereby, the charging cable may more easily be stowed after use. In addition, the charging cable may have less contact with the ground during charging of the vehicle. At a time of charging the vehicle's battery, when the charging cable is extended between the charging station and the vehicle, the flexible pre-shaped member, due to its attachment to the charging cable, mechanically biases the charging cable to return to its coiled state.

Optionally, the pre-shaped member is manually movable between a coiled relaxed state and an uncoiled tensioned state. The uncoiled tensioned state may be exemplified by extending the cable between the vehicle and the charging station. The pre-shaped member will seek to return to the relaxed state, which may be exemplified by the coiled state.

Optionally, the pre-shaped member is arranged inside a flexible tube, which flexible tube is fixed to the vehicle charging cable and which extends along at least a part of the length of the vehicle charging cable. When arranged inside the tube, the pre-shaped member may twist relatively freely around its axis of elongation, which assists in coiling and uncoiling the charging cable without damaging the shape of the pre-shaped member.

According to a third aspect of the present disclosure, the object is at least partly achieved by a charging cable assembly according to claim 13.

Hence, there is provided a charging cable assembly comprising a vehicle charging cable having a first end and a second end, a first connector arranged at the first end, and a second connector arranged at the second end. The charging cable assembly comprises the connector arrangement according to any one of the embodiments of the first aspect of the disclosure, and/or the cable coiling device according to any one of the embodiments of the second aspect of the disclosure.

The charging cable assembly thus comprises a charging cable having the first and the second connectors. Further, the charging cable assembly comprises either the connector arrangement or the cable coiling device, or both the connector arrangement and the cable coiling device. The advantages of the charging cable assembly are directly derivable from the described advantages of the first and second aspects of the disclosure above.

Optionally, when the charging cable assembly comprises the connector arrangement according to any one of the embodiments of the first aspect of the disclosure, the first connector interface may be fixedly attached to, or integrated with the first connector.

Optionally, when the charging cable assembly comprises the connector arrangement according to any one of the embodiments of the first aspect of the disclosure, the second connector may be releasably accommodated by the second connector interface.

Accordingly, the connector arrangement may be fixed to the first connector, and the second connector may be releasably attached to the connector arrangement by its accommodation in the second connector interface. Thereby, the charging cable assembly may be easily handled by only one hand by a user when connecting the first connector to a charging station.

Optionally, when the charging cable assembly comprises the cable coiling device according to any one of the embodiments of the second aspect of the disclosure, the pre-shaped member may be fixedly attached to the charging cable or integrated in the charging cable. Thereby, the charging cable assembly may be kept in an ordered coiled shape. In addition, the pre-shaped member urges the charging cable to return to the coiled shape after being extended, which facilitates the handling of the charging cable assembly.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Further objects and advantages of, and features of the disclosure will be apparent from the following description of one or more embodiments, with reference to the appended drawings, where:
- Fig. 1: shows an example of usage of the first and third aspects of the disclosure in conjunction with a charging station.
- Figs 2-4: show exemplary perspective views of a connector arrangement according to the first aspect of the disclosure of the disclosure.
- Figs 5-6: show exemplary perspective views of a cable coiling device according to the second aspect of the disclosure.
- Figs 7-9: show exemplary perspective views of a charging cable assembly according to the third aspect of the disclosure.
- Figs 10-12: show examples of operating the charging cable assembly in relation to a charging station.

### DETAILED DESCRIPTION OF EXAMPLE EMBODIMENTS OF THE INVENTION

The present disclosure is developed in more detail below referring to the appended drawings which show examples of embodiments. The disclosure should not be viewed as limited to the described examples of embodiments. Like numbers refer to like elements throughout the description.

The terminology used herein is for the purpose of describing particular aspects of the disclosure only and is not intended to limit the invention. As used herein, the singular forms "a", "an" and "the" are intended to include the plural forms as well, unless the context clearly indicates otherwise. Unless otherwise defined, all terms (including technical and scientific terms) used herein have the same meaning as commonly understood by one of ordinary skill in the art to which this disclosure belongs.

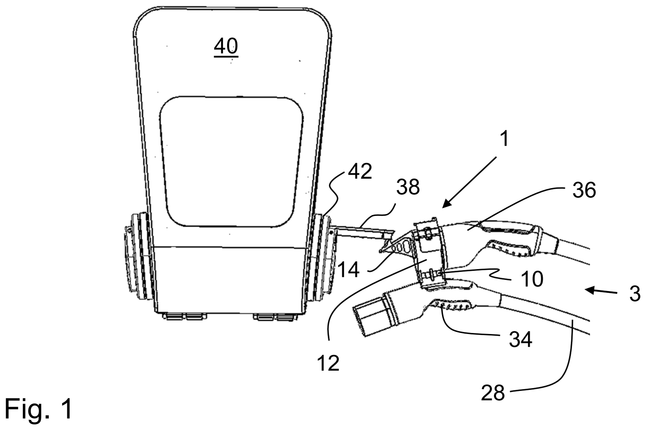

**Fig. 1** exemplifies a connector arrangement 1 according to the first aspect of the disclosure and charging cable assembly according to the third aspect of the disclosure applied to a charging station 40.

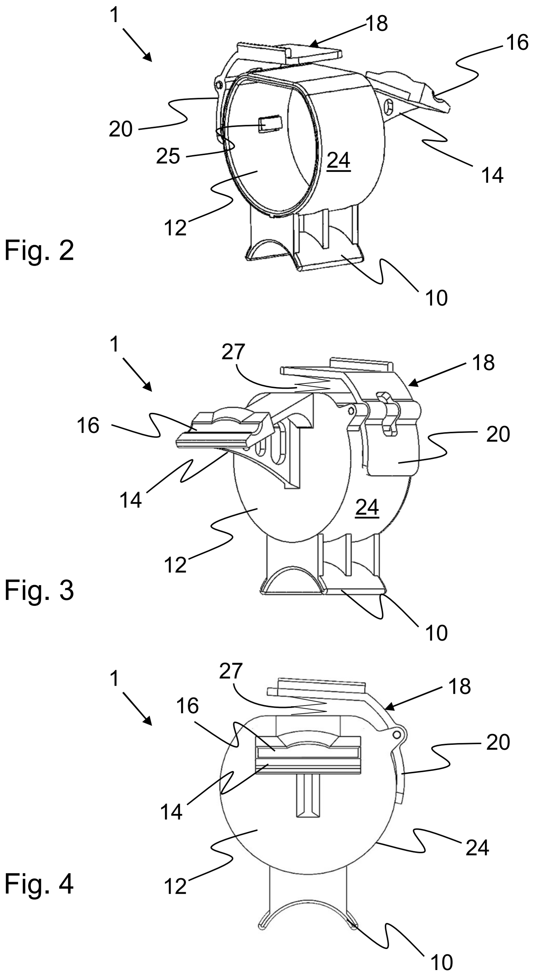

**Figs 2-4** show detailed perspective views of the exemplary connector arrangement 1 according to the first aspect of the disclosure. The connector arrangement 1 is suitable for a charging cable 28 of an electric vehicle.

As illustrated in **Figs 1-4****,** the connector arrangement 1 comprises a first connector interface 10 configured to be fixed to a first connector 34 of a vehicle charging cable 28, and a second connector interface 12 configured to releasably accommodate a second connector 36 of the vehicle charging cable 28.

The connector arrangement 1 further comprises a socket interaction device 14 configured to engage a socket lid 38 of a vehicle charging station 40, to open the socket lid 38 and to keep the socket lid 38 open, upon a manual operation of the connector arrangement 1.

The connector arrangement 1 is thus a device which is configured to hold the first and second connectors 34, 36 of a vehicle charging cable 28. The first and second connectors 34, 36 are preferably kept adjacent to each other by the connector arrangement 1.

The configuration of the connector arrangement 1 results in a device which may fix the first and the second connectors 34, 36 in relation to each other. An operator may thereby use a single hand to hold the first and second connectors 34, 36. A user may for instance hold one of the connectors in one hand and the other connector will be carried along because it is secured to the connector arrangement 1. The user may alternatively hold a part of the connector arrangement 1 itself in one hand and the first and second connectors 34, 36 will be carried along due to their mechanical connection to the connector arrangement 1. In the latter alternative, the "part" of the connector arrangement 1 may comprise a handle (not shown) for carrying and operating the connector arrangement 1.

The first connector interface 10 may be fixation device configured to be fixedly attached to the first connector 34. The first connector interface 10 may alternatively be integrated with the first connector 34 as a structural part of the first connector 34.

The second connector interface 12 may be a holder configured to releasably hold the second connector 36 such that the second connector 36 may be removed from the connector arrangement 1.

The socket interaction device 14 is a structural element of the connector arrangement 1, which structural element is dimensioned such that a user may put it in physical contact/engagement with the socket lid 38 by moving the connector arrangement 1 in relation to the socket lid 38. Further movement of the connector arrangement 1 in relation to the socket lid 38 (e.g. in relation to the charging station 40) may open the socket lid 38 using the socket interaction device 14. The first connector 34 may subsequently be inserted in the socket 42 while the socket lid 38 is kept open by the socket interaction device 14. The socket interaction device 14 is thus configured to enable a user to hold the connector arrangement 1 with one hand while opening the socket lid 38 and inserting the first connector 34 in the socket 42, still using only one hand. The connector arrangement 1 and the socket interaction device 14 are dimensioned and arranged in relation to each other such that the socket lid 38 may be opened (and kept open) and such the first connector 34 may be inserted without removing the second connector 36 from the second connector interface 12 and without assisting the operation using the second hand of the user. The exact dimensions and the relative placement of the socket interaction device 14 in relation to the connector arrangement 1 is derivable by limited experiments and measurements and is not considered inventive per se. Instead, the present disclosure revolves more broadly around a device for keeping and holding the first and second connector 34, 36 while at the same time providing a feature for opening the socket lid 38.

When the first connector 34 has been inserted in the socket 42, the second connector 36 may be removed from the second connector interface 12 of the connector arrangement 1 such that the second connector 36 may be connected to a charging interface of the vehicle (not shown).

The connector arrangement 1 may comprise a unitary body comprising the first and second connector interfaces 10, 12. The connector arrangement 1 may thus be a single-component structure, which may be fixedly attached to, or integrated with, the first connector 34 of the vehicle charging cable 38. The illustrated connector arrangement 1 exemplifies a connector arrangement 1 which may be fixedly attached to the first connector 34, such as by fastening means or by clamping. The unitary body may be molded plastic.

The socket interaction device 14 may comprise a rigid structure protruding from the connector arrangement 1. The structure may be rigid. However, the structure may alternatively comprise a flexible part which enables a greater flexibility regarding dimensioning of the socket interaction device since the structure may flex when it keeps the socket lid open during insertion of the first connector in the socket. In addition, the flexible part may for instance comprise rubber, which improves friction when engaging the socket lid 38 to reduce the risk of slipping.

The rigid structure may comprise an engagement member 16 configured to engage the socket lid 38 of the vehicle charging station 40. The engagement member 16 may for instance comprise a depression or a hook-shaped structure, which may engage an edge of the socket lid 38. In **Figs 2-4****,** the engagement member 16 is exemplified as a shallow trench which may accommodate and engage the edge of the socket lid 38.

The manual operation of the connector arrangement 1 may comprise a manually controlled movement of the connector arrangement 1 in relation to the connector socket 42 of the vehicle charging station 40. The manually controlled movement may comprise sequential part-movements for engaging the socket lid 38 with the socket interaction device 14, opening the socket lid 38 with the socket interaction device 14 and inserting the first connector 34 in the socket 42 while the socket interaction device 14 keeps the socket lid 38 open.

The second connector interface 12 may comprise a locking mechanism 18 configured to releasably lock the second connector 36 of the vehicle charging cable 28 in accommodation with the second connector interface 12. The locking mechanism 18 may lock the second connector 36 in accommodation with the second connector interface 12 upon insertion of the second connector 36 in the second connector interface 12. The locking mechanism 18 may be manually operable, by a user, to release the second connector 36. The locking mechanism 18 may comprise friction-fit locking with the second connector 36 such that the second connector 36 may be released and removed from the second connector interface 12 by overcoming a friction force between the second connector 36 and the second connector interface 12.

The locking mechanism 18 may comprise a mechanically biased locking member 20 configured to engage a structure 22 (not shown) of the second connector 36 of the vehicle charging cable 28. The locking member 20 may be mechanically biased such as by pre-tensioning of the locking member 20 or by a spring 27. As such, the locking member 20 may automatically move into a locking position with the structure of the second connector 36 when the second connector 36 is inserted in the second connector interface 12. **Fig. 3** and **Fig. 4** conceptually exemplify how the locking member 20 is mechanically biased by the spring 27.

The mechanically biased locking member 20 may be manually operable to release the second connector 36 of the vehicle charging cable 28 from engagement with the locking member 20. By manually overcoming the mechanical bias, the user may unlock and release the engagement with the second connector 36. In the example of **Fig. 3** and **Fig. 4****,** using a spring 27, the locking member 20 comprises and arm which is arranged to pivot around a hinge 19. The second connector 36 may be released by pressing the locking member 20 against the mechanical bias of the spring 27 such that the locking member 20 pivots around the hinge 19, releasing the engagement with the second connector 36.

The second connector interface 12 may further comprises a sleeve 24 configured to accommodate the second connector 36 of the vehicle charging cable 28. The mechanically biased locking member 20 may be arranged on the sleeve 24 and may comprise a protrusion 25, as shown in **Fig. 2****,** configured to protrude through the sleeve 24 to engage the structure 22 (not shown) of the second connector 36 of the vehicle charging cable 28 accommodated in the sleeve 24. The structure 22 of the second connector 36, although not shown in the drawings, may be any kind of structure such as a protrusion or depression which may be engaged by the protrusion 25 of the locking member 20.

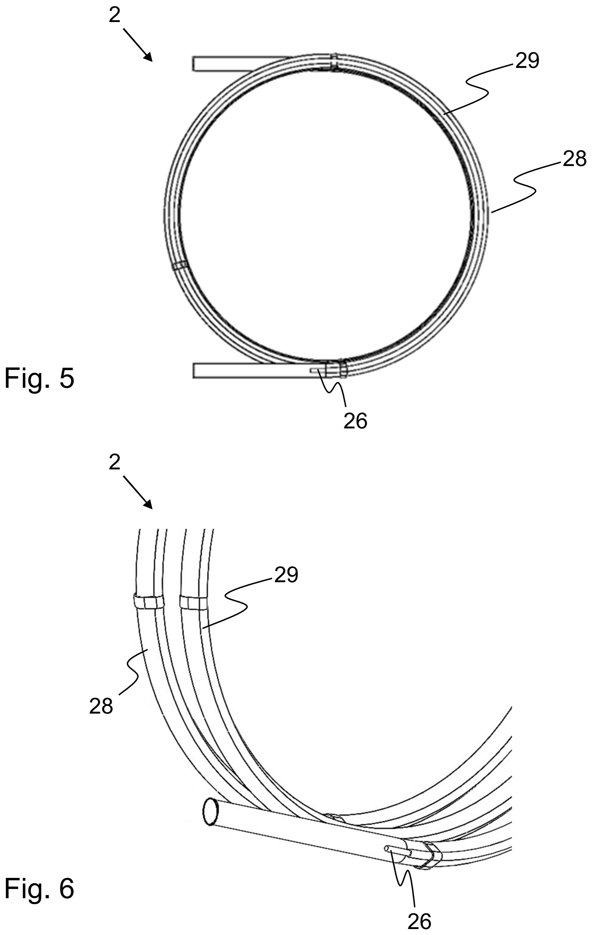

**Fig. 5** and **Fig. 6** exemplify a cable coiling device 2 for a vehicle charging cable 28 according to the second aspect of the disclosure. The cable coiling device 2 comprises an elongated flexible pre-shaped member 26 configured to be fixed to a vehicle charging cable 28 and to extend along at least a part of a length of the vehicle charging cable 28.

The pre-shaped member 26 may be configured to either be fixed alongside the charging cable 28 or to be integrated in the charging cable 28. The pre-shaped member is configured to be pre-shaped in a coil shape to keep the charging cable 28 in order, i.e. such that the pre-shaped member 26 strives to keep the charging cable 28 in a coil. Thereby, the charging cable 28 may more easily be stowed after use. In addition, the charging cable 28 may have less contact with the ground between the vehicle and the charging station during charging of the vehicle. Such as at a time of charging the vehicle's battery, the pre-shaped member 26 may be manually moved between a coiled relaxed state and an uncoiled tensioned state. The uncoiled tensioned state may be exemplified by extending the cable between the vehicle and the charging station 40. The pre-shaped member will thus seek to return to the relaxed state, which may be exemplified by the coiled state. When the charging cable 28 is extended between the charging station 40 and the vehicle, the flexible pre-shaped member 26, due to its attachment to the charging cable 28, mechanically biases the charging cable 28 to return to its coiled state. Consequently, and due to the cable coiling device 2, after disconnecting the first and second connectors 34, 36, the charging cable 28 is easily collected in the shape of a coil.

The pre-shaped member 26 may be arranged inside a flexible tube 29, which tube 29 is fixed to the vehicle charging cable 28 and which extends along at least a part of the length of the vehicle charging cable 28. When arranged inside the flexible tube 29, the pre-shaped member 26 may twist relatively freely around its axis of elongation, which assists in coiling and uncoiling the charging cable 28 without damaging the shape of the pre-shaped member 26.

The cable coiling device 2 may be applied to any kind of cable and is not restricted to a vehicle charging cable 28. Neither is it restricted to a cable comprising the connector arrangement 1 according to the first aspect of the disclosure.

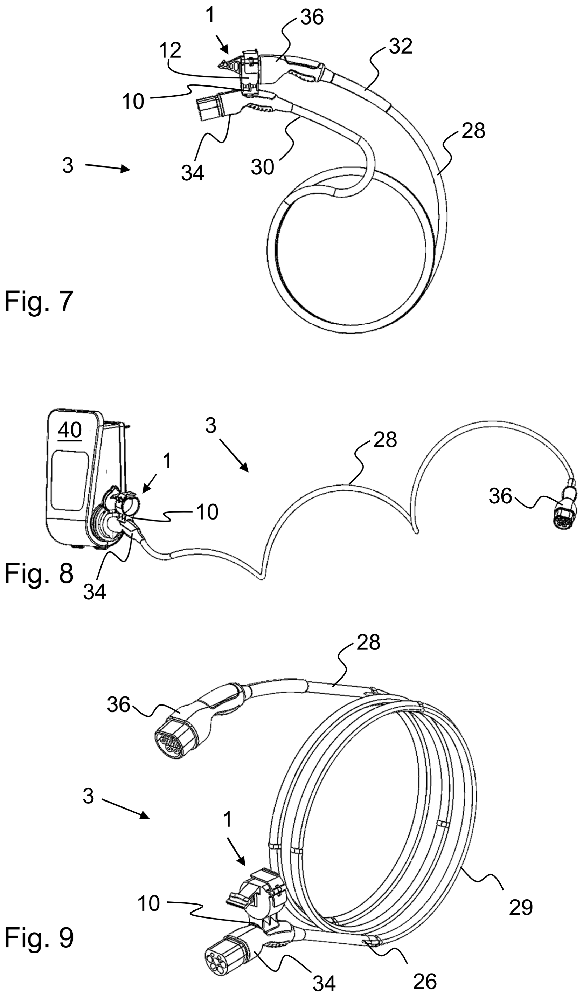

**Figs 7-9** exemplify a charging cable assembly 3 according to the third aspect of the disclosure. The charging cable assembly 3 is intended as an accessory for electric vehicles and comprises a vehicle charging cable 28 having a first end 30 and a second end 32, a first connector 34 arranged at the first end 30, and a second connector 36 arranged at the second end 32. The charging cable assembly 3 further comprises the connector arrangement 1 according to any one of the embodiments of the first aspect of the disclosure, and/or the cable coiling device 2 according to any one of the embodiments of the second aspect of the disclosure.

The charging cable assembly 3 thus comprises a charging cable 28 having the first and the second connectors 34, 36. Further, the charging cable assembly 3 comprises either the connector arrangement 1 or the cable coiling device 2, or both the connector arrangement 1 and the cable coiling device 2. The advantages of the charging cable assembly 3 are directly derivable from the described advantages of the first and second aspects of the disclosure above.

**Fig. 7** shows the charging cable assembly 3 comprising the connector arrangement 1, where the first connector interface 10 is fixedly attached to, or integrated with the first connector 34. The charging cable assembly is shown in a coiled state and the second connector 36 is accommodated in the second connector interface 12.

As shown in **Fig. 8****,** the second connector 36 may be releasably accommodated by the second connector interface 12. **Fig. 8** shows the charging cable in an extended state with the second connector 36 released from the second connector interface 12. When released from the second connector interface 12, the second connector 36 may be ready to be connected to a charging interface, such as a charging socket of a vehicle (not shown).

As described above, the connector arrangement 1 may be fixed to the first connector 34, and the second connector 36 may be releasably attached to the connector arrangement 1 by its accommodation in the second connector interface 12. Thereby, the charging cable assembly 3 may be easily handled by only one hand by a user when connecting the first connector 34 to the charging station 40.

The pre-shaped member 26 may be fixedly attached to the charging cable 28 or integrated in the charging cable 28. The pre-shaped member 26 is not shown in **Fig. 7** or **Fig. 8****.** The pre-shaped member may be integrated in the charging cable 28 of **Fig. 7** and/or **Fig. 8****.**

**Fig. 9** shows the charging cable assembly 3 with the second connector 36 released from the second connector interface 12. It further exemplifies how the flexible tube 29 may alternatively be fixedly attached to the charging cable assembly 3, thereby fixing the pre-shaped member to the charging cable 28. The charging cable assembly 3 may thus be kept in an ordered coiled shape. In addition, the pre-shaped member 26 urges the charging cable 28 to return to the coiled shape after being extended, which facilitates the handling of the charging cable assembly 3.

It is to be understood that the charging cable assembly 3 may comprise either the connector arrangement 1 or the cable coiling device 2 or both. Each of the connector arrangement 1 and the cable coiling device 2 assist the user to operate the charging cable assembly 3 with a single hand. The connector arrangement 1 assists in opening the socket lid 38 and inserting the first connector 34 in the socket 42. The cable coiling device 2 assists in keeping the charging cable in order and off the ground.

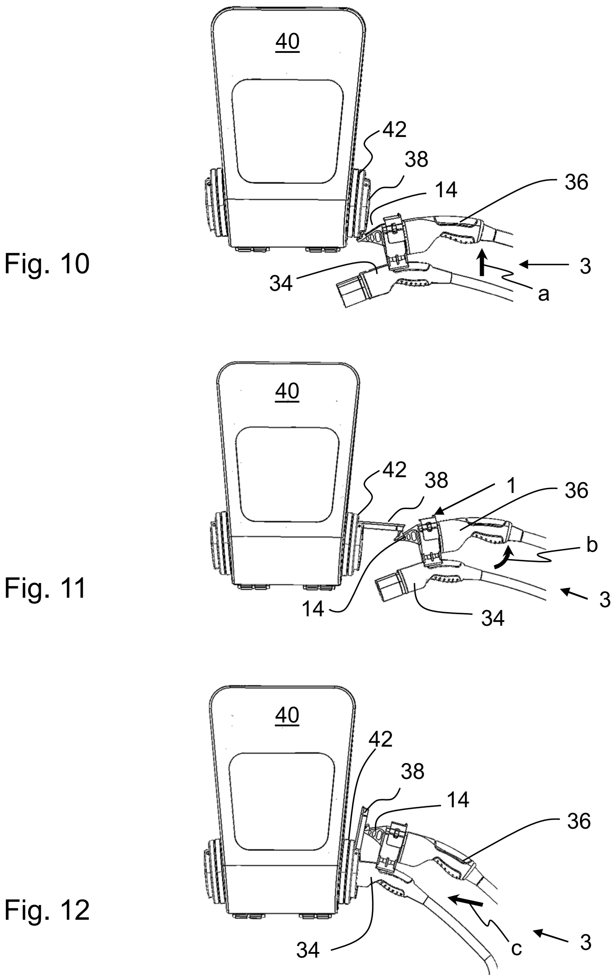

**Figs 10-12** exemplify manual operation of the connector arrangement 1 and of the charging cable assembly 3. The manual operation may be performed by a user holding the connector arrangement 1 by one hand. The connector arrangement 1 may be conveniently held by the user by gripping for instance the second connector 36 or the first connector 34 to perform the manual operation.

**Fig. 10** show engagement of the edge of the socket lid 42 by the socket interaction device. The arrow a indicates a direction of motion of the charging cable assembly 3 to engage the socket interaction device 14 with the socket lid 38.

In **Fig. 11****,** the arrow b indicates an arc-shaped motion of the charging cable assembly 3 to open the socket lid 38.

The first connector 34 may be inserted in the socket 42 of the charging station 40 by the motion indicated by arrow c in **Fig. 12****.** At the same time the socket interaction device 14 pushes against the socket lid 38 and keeps the lid open.

### LIST OF EXAMPLES:

1. A connector arrangement (1) for a charging cable (28) for an electric vehicle, the connector arrangement (1) comprising:
   - a first connector interface (10) configured to be fixed to a first connector (34) of a vehicle charging cable (28),
   - a second connector interface (12) configured to releasably accommodate a second connector (36) of the vehicle charging cable (28), and
   wherein the connector arrangement (1) further comprises a socket interaction device (14) configured to engage a socket lid (38) of a vehicle charging station (40), to open the socket lid (38) and to keep the socket lid (38) open, upon a manual operation of the connector arrangement (1).
2. The connector arrangement (1) according to example 1, wherein the connector arrangement (1) comprises a unitary body comprising the first and second connector interfaces (10, 12).
3. The connector arrangement (1) according to any one of the previous examples, wherein the socket interaction device (14) comprises a rigid structure protruding from the connector arrangement (1).
4. The connector arrangement (1) according to example 3, wherein the rigid structure comprises an engagement member (16), configured to engage a socket lid (38) of a vehicle charging station (40).
5. The connector arrangement (1) according to any one of the previous examples wherein the manual operation of the connector arrangement (1) comprises a manually controlled movement of the connector arrangement (1) in relation to a connector socket (42) of a vehicle charging station (40).
6. The connector arrangement (1) according to any one of the previous examples, wherein the second connector interface (12) comprises a locking mechanism (18) configured to releasably lock a second connector (36) of a vehicle charging cable (28) in accommodation with the second connector interface (12).
7. The connector arrangement (1) according to example 6, wherein the locking mechanism (18) comprises a mechanically biased locking member (20) configured to engage a structure (22) of the second connector (36) of the vehicle charging cable (28).
8. The connector arrangement (1) according to example 7, wherein the mechanically biased locking member (20) is manually operable to release the second connector (36) of the vehicle charging cable (28) from engagement with the locking member (20).
9. The connector arrangement (1) according to any one of examples 7-8, wherein the second connector interface (12) comprises a sleeve (24) configured to accommodate the second connector (36) of the vehicle charging cable (28) and wherein the mechanically biased locking member (20) is arranged on the sleeve (24) and comprises a protrusion (25) configured to protrude through the sleeve (24) to engage the structure (22) of the second connector (36) of the vehicle charging cable (28) accommodated in the sleeve (24).
10. A cable coiling device (2) for a vehicle charging cable (28), the cable coiling device (2) comprising an elongated flexible pre-shaped member (26) configured to be fixed to a vehicle charging cable (28) and to extend along at least a part of a length of the vehicle charging cable (28).
11. The cable coiling device (2) according to example 10, wherein the pre-shaped member (26) is manually movable between a coiled relaxed state and an uncoiled tensioned state.
12. The cable coiling device (2) according to any one of examples 10-11, wherein the pre-shaped member is arranged inside a flexible tube (29), which tube (29) is fixed to the vehicle charging cable (28) and which extends along at least a part of the length of the vehicle charging cable (28).
13. A charging cable assembly (3) for electric vehicles, the charging cable assembly comprising:
   - a vehicle charging cable (28) having a first end (30) and a second end (32),
   - a first connector (34) arranged at the first end (30),
   - a second connector (36) arranged at the second end (32), and wherein the charging cable assembly (3) comprises the connector arrangement (1) according to any one of examples 1-9, and/or the cable coiling device (2) according to any one of examples 10-12.
14. The charging assembly (3) according to example 13, comprising the connector arrangement (1) according to example 1-9, wherein the first connector interface (10) is fixedly attached to, or integrated with the first connector (34).
15. The charging assembly (3) according to example 13, comprising the connector arrangement (1) according to example 1-9, wherein the second connector (36) is releasably accommodated by the second connector interface (12).
16. The charging assembly (3) according to example 13, comprising the cable coiling device (2) according to any one of examples 10-12, wherein the pre-shaped member (26) is fixedly attached to the charging cable (28), or integrated in the charging cable (28).

## Claims

1. A connector arrangement (1) for a charging cable (28) for an electric vehicle, the connector arrangement (1) comprising:
- a first connector interface (10) configured to be fixed to a first connector (34) of a vehicle charging cable (28),
- a second connector interface (12) configured to releasably accommodate a second connector (36) of the vehicle charging cable (28), and
wherein the connector arrangement (1) further comprises a socket interaction device (14) configured to engage a socket lid (38) of a vehicle charging station (40), to open the socket lid (38) and to keep the socket lid (38) open, upon a manual operation of the connector arrangement (1).

2. The connector arrangement (1) according to claim 1, wherein the connector arrangement (1) comprises a unitary body comprising the first and second connector interfaces (10, 12).

3. The connector arrangement (1) according to any one of the previous claims, wherein the socket interaction device (14) comprises a rigid structure protruding from the connector arrangement (1).

4. The connector arrangement (1) according to claim 3, wherein the rigid structure comprises an engagement member (16), configured to engage a socket lid (38) of a vehicle charging station (40).

5. The connector arrangement (1) according to any one of the previous claims wherein the manual operation of the connector arrangement (1) comprises a manually controlled movement of the connector arrangement (1) in relation to a connector socket (42) of a vehicle charging station (40).

6. The connector arrangement (1) according to any one of the previous claims, wherein the second connector interface (12) comprises a locking mechanism (18) configured to releasably lock a second connector (36) of a vehicle charging cable (28) in accommodation with the second connector interface (12).

7. The connector arrangement (1) according to claim 6, wherein the locking mechanism (18) comprises a mechanically biased locking member (20) configured to engage a structure (22) of the second connector (36) of the vehicle charging cable (28).

8. The connector arrangement (1) according to claim 7, wherein the mechanically biased locking member (20) is manually operable to release the second connector (36) of the vehicle charging cable (28) from engagement with the locking member (20).

9. The connector arrangement (1) according to any one of claims 7-8, wherein the second connector interface (12) comprises a sleeve (24) configured to accommodate the second connector (36) of the vehicle charging cable (28) and wherein the mechanically biased locking member (20) is arranged on the sleeve (24) and comprises a protrusion (25) configured to protrude through the sleeve (24) to engage the structure (22) of the second connector (36) of the vehicle charging cable (28) accommodated in the sleeve (24).

10. A cable coiling device (2) for a vehicle charging cable (28), the cable coiling device (2) comprising an elongated flexible pre-shaped member (26) configured to be fixed to a vehicle charging cable (28) and to extend along at least a part of a length of the vehicle charging cable (28).

11. The cable coiling device (2) according to claim 10, wherein the pre-shaped member is arranged inside a flexible tube (29), which tube (29) is fixed to the vehicle charging cable (28) and which extends along at least a part of the length of the vehicle charging cable (28).

12. A charging cable assembly (3) for electric vehicles, the charging cable assembly comprising:
- a vehicle charging cable (28) having a first end (30) and a second end (32),
- a first connector (34) arranged at the first end (30),
- a second connector (36) arranged at the second end (32), and
wherein the charging cable assembly (3) comprises the connector arrangement (1) according to any one of claims 1-9, and/or the cable coiling device (2) according to any one of claims 10-11.

13. The charging assembly (3) according to claim 13, comprising the connector arrangement (1) according to claim 1-9, wherein the first connector interface (10) is fixedly attached to, or integrated with the first connector (34).

14. The charging assembly (3) according to claim 13, comprising the connector arrangement (1) according to claim 1-9, wherein the second connector (36) is releasably accommodated by the second connector interface (12).

15. The charging assembly (3) according to claim 13, comprising the cable coiling device (2) according to any one of claims 10-11, wherein the pre-shaped member (26) is fixedly attached to the charging cable (28), or integrated in the charging cable (28).
